Europäisches Patentamt

European Patent Office

Office européen des brevets

(11) Numéro de publication: **0 301 948**
**A1**

## (12) DEMANDE DE BREVET EUROPEEN

(21) Numéro de dépôt: 88401918.3

(22) Date de dépôt: 22.07.88

(51) Int. Cl.⁴: **G 01 N 30/60**
G 01 N 30/48, B 01 D 15/08

(30) Priorité: 24.07.87 FR 8710551

(43) Date de publication de la demande:
01.02.89 Bulletin 89/05

(84) Etats contractants désignés:
AT BE CH DE ES FR GB IT LI NL SE

(71) Demandeur: COMPAGNIE GENERALE D'ELECTRICITE
Société anonyme dite:
54, rue La Boétie
F-75382 Paris Cédex 08 (FR)

(72) Inventeur: Dubots, Patrick
1 chemin de Gaillarbois
F-78640 Neauphle le Chateau (FR)

Le Mehaute, Alain
3 route de Belleville
F-91190 Gif sur Yvette (FR)

Legat, Denis
4 Square de la Beauce
F-91090 Lisses (FR)

Cottevieille, Denis
187 rue de Paris
F-93100 Montreuil (FR)

Bottini, Gérard
16 rue du Champ Chevron
F-91510 Lardy (FR)

Tondeur, Daniel
259 Rue Salvador Allende
F-54230 Neuves Maisons (FR)

Cintré, Muriel
13 rue de Douet Neuf
Lomener F-56270 Ploemeur (FR)

(74) Mandataire: Weinmiller, Jürgen et al
Lennéstrasse 9 Postfach 24
D-8133 Feldafing (DE)

(54) Dispositif de séparation chromatographique de fluides.

(57) Dispositif de séparation chromatographique d'un mélange de fluides (2) comprenant au moins un réacteur, caractérisé par le fait que ledit réacteur (4) est constitué d'une enveloppe dans laquelle est arrangé un grand nombre de fibres en matériau choisi parmi les métaux purs et les alliages d'aluminium, de magnésium, les métaux de transition et les métaux nobles, et les matériaux amorphes tels que le verre et la silice, lesdites fibres présentant un diamètre compris entre vingt microns et un centième de micron, et une longueur comprise entre un cm et quelques dizaines de centimètres, lesdites fibres définissant entre elles des conduits capillaires dont les diamètres sont compris entre cinq microns et trente cinq Angstroems.

FIG.1

EP 0 301 948 A1

Bundesdruckerei Berlin

# 0 301 948

**Description**

## Dispositif de séparation chromatographique de fluides.

La présente invention concerne un dispositif de séparation chromatographique de fluides.

Dans les procédés de séparation chromatographique habituels, on met en oeuvre des colonnes de séparation constituées de tubes en acier inoxydable remplis de poudres adsorbantes. Ces poudres, par exemple du genre oxydes, tels que zéolithe, aluminosilicates, ou macromolécules organiques, sont en général greffées de fonctions chimiques qui assurent la sélectivité des corps mélangés et permettent leur séparation. Les tubes utilisés présentent généralement un diamètre moyen voisin de cent microns à quelques millimètres et une longueur de deux mètres environ, et il est nécessaire en chromatographie liquide, de maintenir entre leur entrée et leur sortie une différence de pression de l'ordre de 300 bars, alors qu'elle n'est que de quelques bars en chromatographie gazeuse.

On connaît également un procédé de séparation chromatographique "capillaire" où l'on utilise un tube capillaire vide présentant un diamètre de 100 microns environ.

Ce tube en silice doit avoir une vingtaine de mètres de longueur pour assurer une séparation meilleure que la séparation par colonnes à garnissage.

On aboutit pour tous les procédés connus à des installations très encombrantes et très difficiles à utiliser.

La présente invention a pour but de mettre en oeuvre un dispositif de séparation chromatographique de gaz ou de liquides permettant d'obtenir les mêmes résultats que les procédés antérieurs, mais dont le principe le rend beaucoup moins encombrant, ce dispositif devant s'appliquer aussi bien à la caractérisation en laboratoire des éléments d'un mélange de gaz ou d'un mélange de liquides, qu'à la fabrication industrielle de molécules à haute valeur ajoutée.

La présente invention a pour objet un dispositif de séparation chromatographique d'un mélange de fluides comprenant au moins un réacteur, caractérisé par le fait que ledit réacteur est constitué d'une enveloppe dans laquelle est arrangé un grand nombre de fibres en un matériau choisi parmi les métaux purs et les alliages d'alumi nium, de magnésium, les métaux de transition et les métaux nobles, et les matériaux amorphes tels que le verre et la silice, lesdites fibres présentant un diamètre compris entre vingt microns et un centième de micron, et une longueur comprise entre 1 cm et quelques dizaines de centimètres, lesdites fibres définissant entre elles des conduits capillaires dont les diamètres sont compris entre cinq microns et trente cinq Angstroems.

Selon un premier mode de réalisation lesdites fibres sont disposées parallèlement entre elles en arrangement quadratique.

Selon un second mode de réalisation lesdites fibres sont disposées suivant les génératrices d'un empilement hexagonal.

Selon une variante lesdites fibres sont regroupées de manière à former des brins torsadés en hélice.

Elles peuvent être également enroulées sur une bobine.

Un dispositif selon l'invention peut comporter des moyens pour introduire ledit mélange de fluides dans ledit réacteur selon l'axe principal des fibres, ou suivant la génératrice de l'hélice des brins torsadés.

Ledit réacteur est disposé de préférence dans une enceinte thermique à température réglable et des moyens sont prévus pour faire varier la pression du fluide dans ledit réacteur.

Pour certaines séparations particulières, les fibres sont avantageusement greffées de fonctions chimiques, telles que des polyoxyéthylènes, des polyacools, des phénols, des composés aromatiques...

Les fibres qui constituent les éléments fondamentaux d'un réacteur selon l'invention sont connues en tant que fibres supraconductrices dans les documents suivants :
- Brevet français n° 2 543 741
- Brevet français n° 2 553 565
- P. Dubotsd, A. Février, "8th international Conference on Magnet Technology". J. Phys. Supp. 1 (1984), 467-470.
- P. Dubots, "Proceeding of the tenth international cryogenic Conference" (1984), 610-615.
- P. Dubots, A. Février, IEEE .tran mag. MAG 21, 177-180 (1985).

D'autres caractéristiques ou avantages de la présente invention apparaîtront au cours de la description suivante de modes de réalisation donnés à titre illustratif mais nullement limitatif.

- La figure 1 illustre très schématiquement le principe d'un dispositif selon l'invention.

- La figure 2 montre très partiellement en coupe quelques fibres arrangées selon un empilement hexagonal et entrant dans la composition du réacteur selon la figure 1.

- La figure 3 montre très partiellement en coupe quelques fibres arrangées selon un empilement quadratique.

- La figure 4 montre très schématiquement en perspective quelques fibres arrangées en hélice.

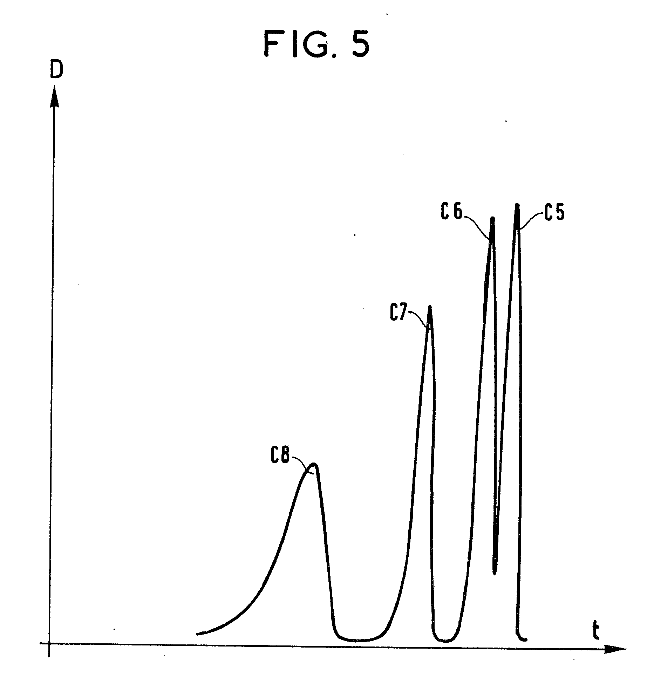

- Les figure 5 à 7 comportent des graphiques illustrant des exemples de séparation d'hydrocarbures grâce à la mise en oeuvre d'un réacteur selon l'invention.

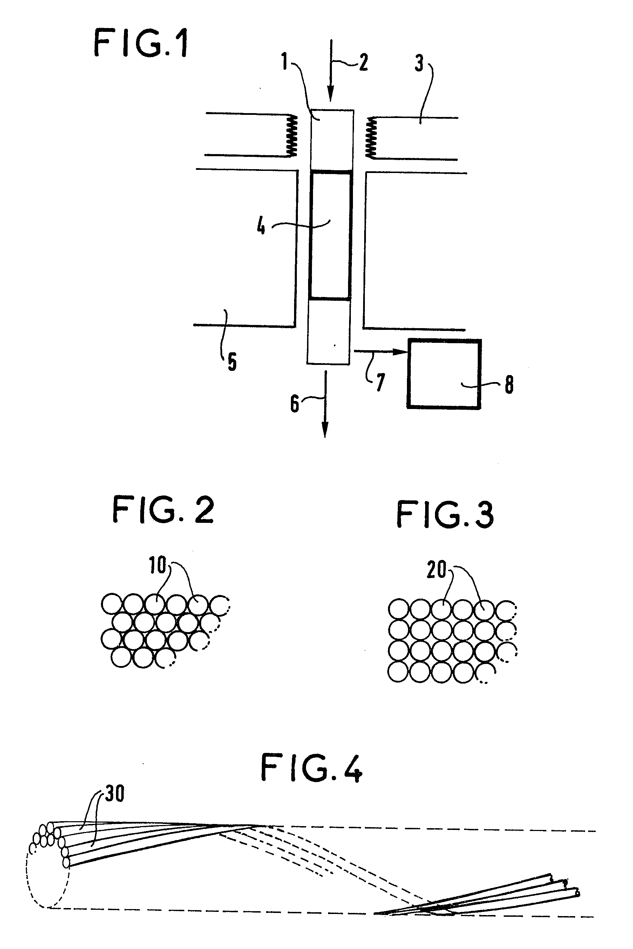

On a illustré très schématiquement et partiellement dans la figure 1 un dispositif selon l'invention.

Il comporte un injecteur 1 de fluide 2 composé d'un mélange de gaz ou de liquides. Cet injecteur thermostaté par une installation schématisée 3 introduit le fluide 2 dans un réacteur selon l'invention 4, disposé dans une enceinte thermostatée 5. La pression d'injection dans le cas d'un gaz peut être de l'ordre

2

de 2 bars par exemple ; elle peut être de l'ordre de 300 bars dans le cas d'un mélange de liquides.

Le réacteur a deux sorties, une sortie 7 reliée à un détecteur 8, par exemple de type catharomètre, et une sortie pour le fluide 6.

Dans un premier exemple de réalisation on met en oeuvre un réacteur 4 comprenant cent brins de 2 000 fibres élémentaires de deux microns de diamètre, en acier inoxydable. Elles sont arrangées comme les fibres 10 de la figure 2. L'ensemble est extrudé sous une gaine de polyéthylène, mais la gaine peut également être en polyamides, polyéthersulfone, polyétheréthercétone... ces dernières gaines ayant pour avantage d'autoriser un fonctionnement à plus haute température. La colonne de fibres présente une hauteur de cinquante centimètres.

Ces fibres en alliage de Niobium-Titane ou en tantale ont été obtenues par un procédé tel que celui qui a été décrit dans les brevets cités plus-haut.

Le fluide 2 est un mélange d'hydrocarbures schématisés par les notations $C_5$, $C_6$, $C_7$, $C_8$, et qui sont respectivement le pentane, l'hexane, l'heptane et l'octane. La température de l'enceinte 5 a été programmée de manière à monter de 65° C à 80° C au cours de l'essai. La pression d'injection est de trois bars.

A la sortie 7 du réacteur 4, on observe au catharomètre 8 les pics successifs correspondant aux différents hydrocarbures séparés dans le réacteur. Ces pics sont reportés dans la figure 4.

On peut noter que la séparation est d'autant meilleure que la température est plus élevée dans la gamme allant de 65° C à 80° C.

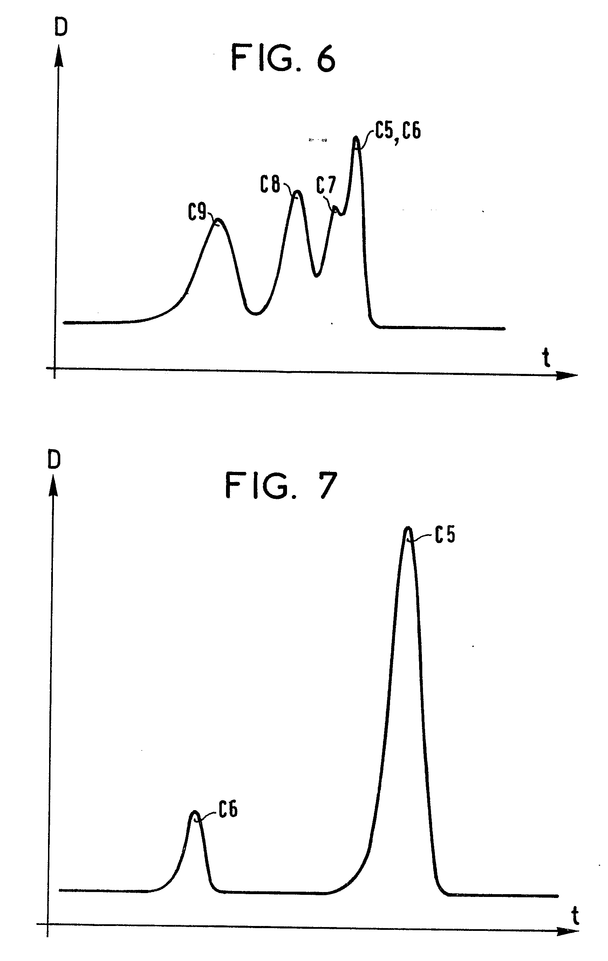

On voit dans la figure 6 un exemple de détection de séparation réalisée à 40° C sans programmation de température ; les pics $C_5$ et $C_6$ ne sont pas séparés.

Par contre, dans la figure 7, on a opéré à 80° C et les pics $C_5$ et $C_6$ sont très largement distincts.

Pour obtenir des résultats analogues avec une installation de l'art antérieur, il aurait fallu mettre en oeuvre un réacteur d'une longueur de 2 mètres environ, rempli d'une résine échangeuse traditionnelle en chromatographie.

Dans la figure 3, on a montré très partiellement et très schématiquement un arrangement quadratique 20 de fibres.

On peut imaginer que l'ensemble des fibres schématisées dans la figure 2 ou dans la figure 3 soit déformé en hélice, de manière à être disposé comme l'ensemble 30 de la figure 4.

Ce type de disposition supprime le risque de voir les fibres se séparer les unes des autres lors du gainage.

Dans un autre exemple de réalisation, pour application à la chromatographie hydrodynamique, on réalise un faisceau de fibres à partir d'un câble supraconducteur, obtenu par le procédé décrit dans les brevets français précités. La matrice en cuivre contient des fibres en alliage niobium/titane de diamètre sensiblement égal à 20 microns. On dissout la matrice dans l'acide nitrique et l'on a un brin comportant des fibres arrangées comme schématisé dans la figure 2 ; le brin est gainé dans une gaine thermorétractable, puis coulé dans l'araldite. Les capillaires entre fibres ont un diamètre moyen de 5 microns.

On réalise un réacteur cylindrique de 9,7 cm de hauteur et de 5,5 cm de diamètre comportant 20 brins et 200.000 fibres environ.

Dans ce réacteur, analogue schématiquement à celui de la figure 1, on a introduit sous une pression de l'ordre de 300 bars un liquide, tel que l'eau, contenant des macromolécules protéïques de grand poids moléculaire ou des particules de latex. Le détecteur 8 choisi est un détecteur U.V.

On a reporté dans le tableau 1 le poids moléculaire de quelques produits testés ainsi que leur taux d'Elution E % et leur taux de filtration hydrodynamique F %. Le taux d'Elution est défini par la relation :

$$E\ \% \ = \ \frac{S_c}{S_d}\ . \ 100$$

Avec

$S_c$ : Surface du pic enregistré par le détecteur 8 après passage de l'échantillon dans la colonne 4.
$S_d$ : Surface du pic enregistré sans passage de l'échantillon dans la colonne.

Le taux de filtration F % est tel que

$$F\ \% \ = \ 100\ -\ E\ \% \ \frac{S_d\ -\ S_c}{S_d}\ . \ 100$$

## TABLEAU I

| Nom du Produit | Poids Moléculaire | E % | F % |
|---|---|---|---|
| Chymotrypsinogène | 25 000 | 21 | 79 |
| Bovine Serum Albumine | 67 000 | 72 | 28 |
| Polyéthylèneglycol | 100 000 | 77 | 23 |
| Aldolase | 158 000 | 30 | 70 |
| Catalase | 240 000 | 57 | 43 |
| Ferritine | 540 000 | 60 | 40 |
| Thyroglobuline | 669 000 | 63 | 37 |
| Dextrane Bleu | 2 000 000 | 83 | 17 |

La filtration des macromolécules est donc possible par la mise en oeuvre du dispositif selon l'invention. Bien entendu l'invention n'est pas limitée au mode de réalisation et aux exemples décrits.

**Revendications**

1/ Dispositif de séparation chromatographique d'un mélange de fluides (2) comprenant au moins un réacteur, caractérisé par le fait que ledit réacteur (4) est constitué d'une enveloppe dans laquelle est arrangé un grand nombre de fibres (10) en matériau choisi parmi les métaux purs et les alliages d'aluminium, de magnésium, les métaux de transition et les métaux nobles, et les matériaux amorphes tels que le verre et la silice, lesdites fibres présentant un diamètre compris entre vingt microns et un centième de micron, et une longueur comprise entre un cm et quelques dizaines de centimètres, lesdites fibres définissant entre elles des conduits capillaires dont les diamètres sont compris entre cinq microns et trente cinq Angstroems.

2/ Dispositif de séparation chromatographique selon la revendication 1, caractérisé par le fait que lesdites fibres sont arrangées parallèlement entre elles en ordre quadratique (20).

3/ Dispositif de séparation chromatographique selon la revendication 1, caractérisé par le fait que lesdites fibres (10) sont disposées suivant les génératrices d'un empilement hexagonal.

4/ Dispositif de séparation chromatographique selon l'une des revendications 2 et 3, caractérisé par le fait que lesdites fibres (30) sont regroupées de manière à former des brins torsadés en hélice.

5/ Dispositif de séparation chromatographique selon l'une des revendications 2 et 3, caractérisé par le fait qu'il comporte des moyens (2) pour introduire ledit mélange de fluides dans ledit réacteur selon l'axe principal des fluides.

6/ Dispositif de séparation chromatographique selon la revendication 4, caractérisé par le fait qu'il comporte des moyens pour introduire ledit mélange suivant la direction de l'hélice des brins torsadés.

7/ Dispositif de séparation chromatographique selon la revendication 1, caractérisé par le fait que les fibres sont enroulées sur une bobine.

8/ Dispositif de séparation chromatographique selon l'une des revendications précédentes, caractérisé par le fait que ledit réacteur (4) est disposé dans une enceinte thermique (5) à température réglable.

9/ Dispositif de séparation chromatographique selon l'une des revendications précédentes, caractérisé par le fait qu'il comporte en outre des moyens pour faire varier la pression du fluide dans ledit réacteur.

10/ Dispositif de séparation chromatographique selon l'une des revendications précédentes, caractérisé par le fait que sur la surface desdites fibres sont greffées des fonctions chimiques.

# FIG.1

# FIG. 2

# FIG.3

# FIG.4

# FIG. 5

FIG. 6

FIG. 7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 570 673  (DUTZ) <br> * Colonne 1, lignes 19-29,37,38,51-59; colonne 2, lignes 29-45,69 - colonne 3, ligne 2 * <br> --- | 1,3,4,5 ,7,10 | G 01 N  30/60 <br> G 01 N  30/48 <br> B 01 D  15/08 |
| Y | US-A-3 319 403  (ROSE) <br> * Colonne 4, ligne 51 - colonne 6, ligne 28 * | 1,5,10 | |
| A | | 3 | |
| | --- | | |
| Y | US-A-3 727 451  (BROERMAN) <br> * Colonne 1, ligne 62 - colonne 4, ligne 36 * | 1,5,10 | |
| A | | 4 | |
| | --- | | |
| A | CH-A-  473 597  (PERKIN-ELMER CORP.) <br> * Colonne 3, ligne 44 - colonne 6, ligne 35 * <br> ----- | 1,8,10 | |

DOMAINES TECHNIQUES RECHERCHES (Int. Cl.4)

G 01 N

Le présent rapport a été établi pour toutes les revendications

| Lieu de la recherche | Date d'achèvement de la recherche | Examinateur |
|---|---|---|
| LA HAYE | 03-11-1988 | WENDLING J.P. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................................
& : membre de la même famille, document correspondant

EPO FORM 1503 03.82 (P0402)